Europäisches Patentamt

European Patent Office

Office européen des brevets

(11) Publication number: 0 118 212
A1

# EUROPEAN PATENT APPLICATION

(21) Application number: 84300677.6

(22) Date of filing: 03.02.84

(51) Int. Cl.³: **B 32 B 27/08**
**B 65 D 75/26**

(30) Priority: 07.02.83 US 464692

(43) Date of publication of application:
12.09.84 Bulletin 84/37

(84) Designated Contracting States:
AT BE CH DE FR GB IT LI LU NL SE

(71) Applicant: AMERICAN CAN COMPANY
American Lane P.O. Box 3610
Greenwich, Connecticut 06836-3610(US)

(72) Inventor: Ching-Hsiang Hsu, Joseph
1116 Oxford Court
Neenah Wisconsin 54956(US)

(72) Inventor: Schroeder, Georg O.
1527 N. Douglas
Appleton Wisconsin 54911(US)

(72) Inventor: Steen, Robert A.
3543 Northridge Lane
Appleton Wisconsin 54911(US)

(74) Representative: Harvey, David Gareth et al,
Graham Watt & Co. Riverhead
Sevenoaks Kent TN13 2BN(GB)

(54) Package for oil-containing products.

(57) An improved package for an oil-containing product is made from a multiple layer packaging sheet material which includes a layer (28) susceptible to swelling when in contact with oil, giving a cockled appearance. Cockling is prevented, however, because the sheet material also includes an oil barrier layer (24) between the oil-containing product and the oil-susceptible layer (28). The barrier layer (24) preferably comprises either nylon or an ethylene vinyl alcohol copolymer, and the oil-susceptible layer is usually high density polyethylene or a blend thereof.

FIG.2

"PACKAGE FOR OIL-CONTAINING PRODUCTS"

This invention relates to the packaging of products containing oils, more particularly in packages using flexible sheet materials. This invention is particularly applicable to such products which are sensitive to moisture, and which require that the package material serve to protect them from infusion of moisture from the outside environment. Such products have conventionally been packaged in glassine-based sheet structures. More recently, all-plastics structures have been used to advantage to improve product quality through increased protection from infusions from the outside environment. Industry has been struggling with the unresolved problem that certain plastics packaging structures, while providing excellent protection of the product, are prone to cockling at some point during the normal shelf life of the product. The term "cockling" as used herein means ripples or puckers, and is usually due to some uneven tension. The uneven tension yields a surface that is not smooth but is uneven and wavy.

We have been seeking the cause of cockling and an object of this invention is to provide a package having a plastics sheet structure in which cockling upon contact with oil is eliminated wholly or substantially. Desirably, the sheet structure is able to confer good protection against gaseous infusions from the outside environment; especially infusions of oxygen and water vapour.

We have surprisingly found that the problem of cockling can be associated with one of the more desirable barrier materials used in a multiple-layer film structure, namely high density polyethylene (HDPE). HDPE is an excellent, and economical barrier to transmission of water vapour. We have discovered that it is an HDPE layer in a packaging film structure that is responsible for the observed cockling. Thus, it has been found that, in packages of oil-containing products such as potato chips, at places where the chips touch the packaging material, oil transfers from the chips to the surface of the packaging material. Our observations show that this oil can penetrate certain layers of the packaging material. In conventional packaging materials, the oil was able to penetrate to the HDPE layer. The HDPE layer would absorb and retain the oil, creating localized swellings in this layer, wherever the oil-containing product touched the packaging material. These localized swellings manifested themselves as cockling of the packaging material.

After extensive studies of multiple layer sheet materials, we have discovered a family of multiple-layer packaging sheet materials which do not cockle when used to package oil-containing products. The sheet materials have in common a first layer which is susceptible to absorption of oil and swelling upon absorption of the oil. This layer usually comprises HDPE. A second layer of the packaging material is positioned such that it is between the first layer and the product. The second layer, which comprises either nylon or an ethylene vinyl alcohol copolymer (EVOH), functions as a barrier to transmission of the oil, so that it never reaches the oil-susceptible first layer.

The invention therefore provides a package comprising a multiple layer flexible packaging sheet material for a product containing an oil, wherein the said flexible sheet material is characterised by comprising:

(a) a first layer susceptible to absorption of oil and to swelling upon absorption thereof, and

(b) a second layer interposed between said first layer and the product, the said second layer being functional as a barrier to transmission of the oil and being chosen from ethylene vinyl alcohol, nylon and metal foil.

In preferred packages, the layer providing the interior surface is heat sealable, and the package is sealed closed by heat seals.

To enhance the appearance and durability of the package, it is usually desirable to have an abuse-resistant layer on the outside of the package. Examples are oriented polypropylene (OPP) and oriented polyesters.

In structuring the entire sheet material, those skilled in the art will recognize that compatible adhesive materials should be selected, to ensure good interfacial adhesions and thus a good structural integrity of the packaging material. The complete structure in the most preferred form, comprises, from the outside of the package inwardly: an abuse resistant layer, a layer susceptible to cockling due to oil absorption, an oil barrier layer, and a heat sealable layer.

Accordingly, the invention provides a package made from a flexible sheet material having the following layers, taken in order from the outside of the package inwardly, namely:

(a) an abuse resistant layer;

(b) a first adhesive layer;

(c) an oil-sensitive layer susceptible to absorption of said oil and to swelling upon oil-absorption;

(d) a second adhesive layer;

(e) an oil barrier layer comprising either nylon or ethylene vinyl alcohol;

(f) a third adhesive layer, and

(g) a sealant layer.

The invention will be explained in more detail in the following description of preferred embodiments thereof, which description is given by way of example only and is to be read in conjunction with the accompanying drawings, in which:

FIGURE 1 is a pictorial view of a package embodying this invention, with part of the packaging material employed cut away to show the enclosed product.

FIGURE 2 shows a cross-section of one embodiment of the packaging sheet material of the invention.

FIGURE 3 shows a cross-section of a second embodiment of the packaging sheet material of the invention.

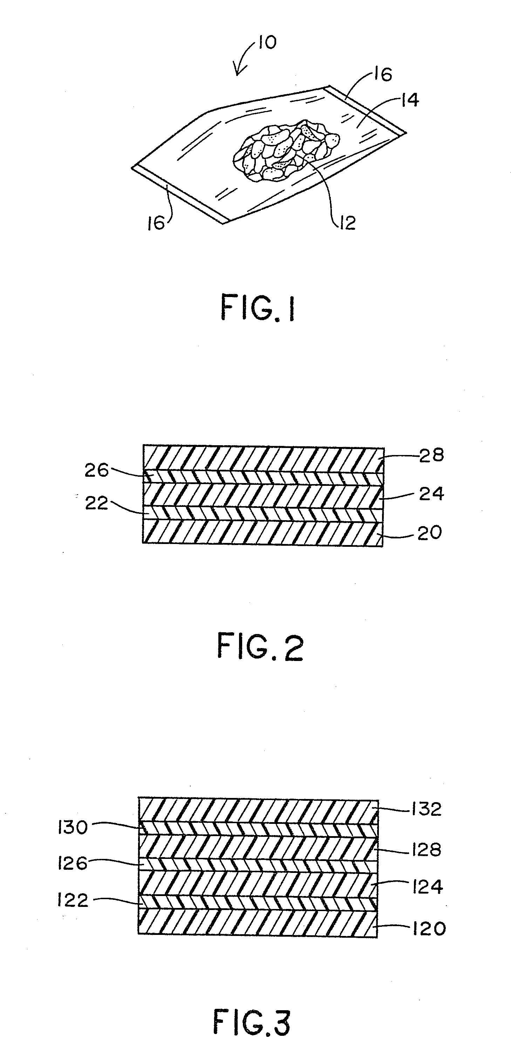

Turning now to the drawings, FIGURE 1 represents a typical application of the package of the invention. The package 10 includes an oil-containing product 12, in this case shown as potato chips, and is made from a flexible packaging film 14. The package is closed by heat sealing along one longitudinal seam, not shown, and by heat seals 16 at each end of the package.

FIGURES 2 and 3 show two illustrative cross-sections of sheet structures useful in practising this invention. Referring now to FIGURE 2, layer 20 is a heat sealable layer and forms the seals necessary in making the bag. Layer 22 is a first adhesive layer. Layer 24 is a layer which serves, for purposes of the invention, as a barrier to transmission of oil through the package structure. Layer 26 is a second adhesive layer. Layer 28 is a material which is susceptible to absorbing oil and which swells upon absorption of the oil.

Addressing now each layer in detail, packages according to this invention all have in common a layer whose composition is susceptible to absorption of oil and swelling in consequence of the oil absorption. In FIGURE 2, that layer is layer 28. As illustrated in the following examples, the layer 28 is usually HDPE. Blends of HDPE also exhibit the same susceptibility, at least to some degree. Other polymers may exhibit the same problem of susceptibility, and it would be obvious to use the solution to the problem herein described for such polymers too.

Layer 24 functions as a barrier to transmission of oil through the packaging sheet material. Preferred materials providing the barrier function are any of the conventionally available EVOH copolymers and nylon polymers. Metal foil is also acceptable as a functional material but is normally not preferred because of cost.

Layer 20 is a heat sealable composition which may be selected with substantial freedom, as the sealant layer usually does not significantly affect the solution of the cockling problem. Illustrative of those sealants which may be selected are ethylene vinyl acetate (EVA), ionomers, polyethylenes and polypropylenes.

Adhesive layers 22 and 26 are selected for their ability to provide good interfacial adhesion at their respective layer interfaces. Those skilled in the art will know or be able to recognize those adhesive polymers which can be used to advantage to ensure good interlayer adhesion. Typical adhesives are olefin based polymers and copolymers, usually having some carboxyl-type modifications. Examples of these are those sold under the trade names of Admer, Plexar, CXA, and AP. Where a metal foil barrier layer is used, other adhesives may be desirable, for example olefinic ester polymers, sometimes combined with special surface or primer treatments. Again, the addressee can select appropriate adhesives based on existing technology, and given the compositions selected for layers 20, 24 and 28.

It is possible, in some structures, to select the composition of adhesive layer 22 such that it not only adheres properly to layer 24 but can also serve as a sealant layer, in which case layer 20 becomes unnecessary.

It is possible to apply, e.g. by printing, the sealant composition in a pattern, whether it be layer 20 or layer 22, onto only those portions of the adjacent layer as will be involved in or located in the seals, e.g. seals 16.

FIGURE 3 represents a structure similar in all respects to the FIGURE 2 structure with two added layers 130 and 132. Layer 120 is the sealant layer corresponding to previously-numbered layer 20.

Similarly, layer 124 serves as the barrier to oil transmission. Layer 128 is the oil-susceptible layer. Layers 122, 126 and 130 are all adhesive layers e.g. as described above. Layer 132 is added to provide abuse-resistance, and may impart some other desirable characteristics such as stiffness and gloss to the package. One is free to choose, for layer 132, virtually any composition that will serve the identified purpose. Most commonly used are OPP and oriented polyesters. The composition of adhesive layer 130 may commonly be selected independently of the compositions of layers 122 and 126, so long as it serves the function of adhering layer 132 to layer 128.

It should be appreciated that the structures herein discussed and illustrated represent a rather simple form of the invention. It is clearly within the scope of the invention to provide other layers in the packaging structure, so long as the relative positions of the susceptible layer and the barrier layer are preserved, such that the barrier layer is located between the susceptible layer and the oily product.

In some of the simple forms of the invention, such as described herein in relation to FIGURE 2, it is to be understood that the packaging structure
is protected from only one side, namely the side
of the structure which will be in contact with oil
in the product inside the package. Thus oil contact
from outside the package will still cause the
swelling and cockling problem. If such oil contact
is contemplated, an additional barrier layer can be
added between the oil susceptible layer and the outside
of the package.

The multiple layer packaging structures used
in this invention can be made by a variety of
conventional processes and combinations of
processes. Typical of the useful processes are
extrusion, coextrusion and extrusion lamination.

EXAMPLE 1

A structure of the nature of that shown in
FIGURE 2 was made by the coextrusion process, using
four extruders. The four extruders-processed four
different polymer compositions and fed them to a
coextrusion die apparatus which converted the melt
streams to a five layer film. Referring now to
FIGURE 2, and correlating the five layer film of
this example, layer 28 was HDPE. Layer 24 was EVOH
having 40% ethylene. Layer 20 was a blend of ionomer,
EVA and HDPE. Layers 22 and 26 were carboxyl-modified LDPE (low density polyethylene); and they resulted from the splitting, in the die, of the stream from one extruder into two parts to form two layers. The final film, based on layer thickness was 50% HDPE, 10% EVOH, 20% sealant layer blend and 10% for each of the LDPE adhesive layers.

EXAMPLE 2

A coextruded 5 layer film was made as in EXAMPLE 1, except that the adhesive layers 22 and 26 were anhydride-modified medium density polyethylene.

EXAMPLE 3

A coextruded film was made as in EXAMPLE 2 except that the EVOH copolymer was 45% ethylene.

EXAMPLE 4

A structure of the nature of that shown in FIGURE 2 was made by the coextrusion process, using four extruders. The four extruders processed four different polymer compositions and fed them to a coextrusion die apparatus which converted the melt streams to a five-layer film. Layer 28 was a blend of 50% HDPE and 50% linear low density polyethylene (LLDPE). Layer 24 was nylon. Layer 20 was a blend of ionomer and EVA, and contained slip and anti-block additives. Layers 22 and 26 were anhydride modified EVA. The final structure was 2 mils (0.051 mm) thick, with 60% of the thickness in layer 28, 10% in layer 24, 15% in layer 20 and 7.5% in each of layers 22 and 26.

In each of the above examples, layers 24 and 28 each included 15% color concentrate as a blend additive.

EXAMPLES 5, 6, 7 and 8

A 0.75 mil (0.02 mm) film of OPP was extrusion laminated to layer 28 of samples of each of the five layer films of EXAMPLES 1-4, using LDPE as the extrusion laminant. The result was a set of seven layer films, each as shown in FIGURE 3.

Each of the films in EXAMPLES 1-8 was used to package potato chips in pouch-type bags as illustrated in EXAMPLE 1. The packages were stored under accelerated aging conditions at a controlled temperature of $100^{\circ}F$ ($38^{\circ}C$), and checked periodically for evidence of cockling. After the normally accepted test period of 48 hours, none of the packages showed any cockling. A control package using a conventional film of the structure

/OPP/LDPE/EVOH/adhesive/HDPE/HDPE/Sealant/ showed objectionable cockling after 48 hours under the same test conditions.  The packages made from the films of EXAMPLES 1-8 were left under accelerated aging conditions for periods of 88 to 109 days and showed no evidence of cockling.

Claims:

1. A package comprising a multiple layer flexible packaging sheet material for a product containing an oil, wherein the said flexible sheet material is characterised by comprising:

(a) a first layer (28, 128) susceptible to absorption of oil and to swelling upon absorption thereof, and

(b) a second layer (24, 124) interposed between said first layer and the product (12), the said second layer being functional as a barrier to transmission of the oil and being chosen from ethylene vinyl alcohol, nylon and metal foil.

2. A package according to claim 1, further characterised by a third layer which is functional as a barrier to transmission of oil, the third layer being disposed outwardly of the first layer (28, 128) and being chosen from ethylene vinyl alcohol, nylon and metal foil.

3. A package according to claim 1 or claim 2, wherein the first layer (28, 128) comprises high density polyethylene or a blend thereof.

4. A package according to any of claims 1 to 3, characterised in that the sheet material includes a heat sealable layer (20 or 22, 120 or 122) on the interior of the package, which is sealed closed by heat seals.

5. A package according to claim 1, characterised in that the flexible packaging sheet material comprises from the outside of said package inwardly:

(a) an oil-sensitive layer (28, 128) susceptible to absorption of said oil and swelling upon oil absorption;

(b) a first adhesive layer (26, 126);

(c) an oil barrier layer (24, 124) comprising either nylon or ethylene vinyl alcohol;

(d) a second adhesive layer (22, 122), and

(e) a sealant layer (20, 120).

6. A package according to claim 1, characterised in that the flexible packaging sheet material comprises, from the outside of said package inwardly:

(a) an abuse resistant layer (132);

(b) a first adhesive layer (130);

(c) an oil-sensitive layer (128) susceptible to absorption of said oil and to swelling upon oil-absorption;

(d) a second adhesive layer (126);

(e) an oil barrier layer (124) comprising either nylon or ethylene vinyl alcohol;

(f) a third adhesive layer (122), and

(g) a sealant layer.

7. A package according to claim 6 or claim 7, wherein the oil-sensitive layer comprises high density polyethylene or a blend thereof.

8. A package according to any of claims 1 to 7 sealed closed and containing an oil-containing product such as potato chips.

FIG.1

FIG.2

FIG.3

European Patent
Office

**EUROPEAN SEARCH REPORT**

**0118212**

Application number

EP 84 30 0677

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 048 209 (TOYO SEIKAN KAISHA LTD.)<br>* Figures; claims 1,5,6; page 2, line 56 - page 3, line 10; page 5, lines 16-37, 63-65; page 6 * | 1,3-7 | B 32 B 27/08<br>B 65 D 75/26 |
| A | | 8 | |
| X | GB-A- 602 260 (STANDARD OIL DEVEL. CO.)<br>* Figures 1,2,4,5,7,8; claims 1-3,5,6; example 14; page 3, lines 4-26, 49-61, 74-80, 122-128; page 4, lines 30-45 * | 1,2 | |
| A | | 8 | |
| X | FR-A-2 275 377 (W.R. GRACE & CO.)<br>* Figures; claims 1,2,5,6; examples * | 1,3,4,5,7,8 | TECHNICAL FIELDS SEARCHED (Int. Cl. ³)<br><br>B 32 B |
| X | US-A-3 507 978 (L. JACHIMOWICZ)<br>* Figures * | 1,3,4 | |
| | --- -/- | | |

The present search report has been drawn up for all claims

| Place of search<br>THE HAGUE | Date of completion of the search<br>15-05-1984 | Examiner<br>DE LA MORINERIE B.M. |
|---|---|---|

| | **DOCUMENTS CONSIDERED TO BE RELEVANT** | | Page 2 |
|---|---|---|---|
| Category | Citation of document with indication. where appropriate, of relevant passages | Relevant to claim | CLASSIFICATION OF THE APPLICATION (Int. Cl. ³) |
| Y | FR-A-2 450 853 (ASAHI KASEI KOGYO K.K.)<br>* Claims 1,9,10,11,15; example 8; page 1, lines 1-25; page 5, line 34 - page 6, line 40; page 12, lines 21-36; page 14, line 29 - page 16, line 8; page 18, line 32 - page 19, line 19; page 20, line 32 - page 21, line 12; page 23, line 18 - page 24, line 4 *<br><br>---<br> | 1,3-8 | |
| X | GB-A-1 360 251 (VAESSEN-SCHOEMAKER HOLDING N.V.)<br>* Page 2, lines 37-44, 86-96; page 3, lines 44-81; page 5, line 6 *<br><br>----- | 1,3 | |
| | | | TECHNICAL FIELDS SEARCHED (Int. Cl. ³) |

The present search report has been drawn up for all claims

| Place of search<br>THE HAGUE | Date of completion of the search<br>15-05-1984 | Examiner<br>DE LA MORINERIE B.M. |
|---|---|---|